# EUROPÄISCHE PATENTSCHRIFT

(11) **EP 1 632 754 B1**
(45) Veröffentlichungstag und Bekanntmachung des Hinweises auf die Patenterteilung: **30.09.2009**
(21) Anmeldenummer: 05018461.3
(22) Anmeldetag: 25.08.2005
(51) Int. Cl.: G01D 5/347

(54) **Verfahren und Vorrichtung zum genauen Bestimmen eines Drehwinkels**
Method and device for precise determination of an angle of rotation
Méthode et dispositif pour la détermination précise d'un angle de rotation

(30) Priorität: 03.09.2004 CH 14632004
(43) Veröffentlichungstag der Anmeldung: 08.03.2006
(73) Patentinhaber: Leica Geosystems AG, 9435 Heerbrugg (CH)
(72) Erfinder: Lippuner, Heinz, 9445 Rebstein (CH)
(74) Vertreter: Kaminski, Susanne

(56) Entgegenhaltungen:
- DE-A1- 1 811 961
- JP-A- 3 170 010
- JP-A- 60 031 011
- US-A- 4 518 859
- US-A- 4 547 667
- US-A- 5 214 426
- US-A1- 2004 118 999

## Beschreibung

Die Erfindung betrifft ein Verfahren zum genauen Bestimmen eines Drehwinkels über einen optischen Detektor mit einer Vielzahl aneinander gereihter Detektorelemente und über einen Drehkörper mit einer Vielzahl um ein Musterzentrum angeordneter Musterelemente nach dem Oberbegriff des Anspruchs 1 und eine Vorrichtung zum genauen Bestimmen eines Drehwinkels nach dem Oberbegriff des Anspruchs 6.

Derartige Verfahren und Vorrichtungen zum genauen Bestimmen eines Drehwinkels werden seit vielen Jahren unter anderem als Drehwinkelgeber bei Messvorrichtungen, insbesondere in der geodätischen und industriellen Vermessung, eingesetzt. Über solche Verfahren und Vorrichtungen ist es bei entsprechenden Vorkehrungen sogar möglich, mit einer Messgenauigkeit in der Grössenordnung einiger weniger Winkelsekunden einen Vollkreis in über eine Million Einheiten aufzulösen.

Um derartig hohe Genauigkeiten erreichen zu können, muss einerseits der Detektor lagestabil zu einem Lager angeordnet sein, über welches der Drehkörper relativ zum Detektor um eine Achse drehbar gelagert ist. Andererseits ist eine hohe Mass- und Formhaltigkeit des Drehkörpers, insbesondere die Anordnung und Ausbildung auf dem Drehkörper in Drehrichtung hintereinander um ein Musterzentrum angeordneter Musterelemente, eine zwingende Voraussetzung. Neben partiellen Teilungsungenauigkeiten, die auf Abweichungen der vorgegebenen Abstände zwischen einzelnen hintereinander angeordneten Musterelementen und/oder auf Abweichungen der Abmessungen der Musterelemente selbst zurückzuführen sind, verunmöglicht in der Praxis oft eine Beabstandung des Musterzentrums von der Achse, eine so genannte Exzentrizität des Musterzentrums zur Achse, ein Erreichen geforderter Genauigkeiten. Aufgrund immer vorhandener Fertigungstoleranzen weist jeder Drehkörper eine Exzentrizität auf, die in der Regel konstanten Wert hat. Rundlaufabweichungen des Lagers können zudem einen Beitrag zur Exzentrizität liefern. Wirken beim Bestimmen von Drehwinkeln - insbesondere bei schweren Messobjekten - auf Teile der Vorrichtung nennenswerte Belastungen durch Kräfte, so können Drehwinkel abhängige oder sich zeitlich ändernde Exzentrizitäten auftreten.

Aus der US 5,214,426 ist unter anderem eine Vorrichtung zum Bestimmen eines Drehwinkels bekannt, die einen Rotorkörper mit einem optischen Muster, einen einzigen CCD-Liniensensor und eine Datenerzeugungseinrichtung zur Erzeugung von Winkeldaten aus den Ausgangsdaten des CCD-Liniensensors aufweist. Der einzige CCD-Liniensensor weist einen eindimensionalen ortsauflösenden Bereich auf und ist im Wesentlichen senkrecht zur Radialrichtung des Rotorkörpers ausgerichtet. Der Rotorkörper ist in Sektoren von jeweils zehn Grad unterteilt und weist in diesen Sektoren als Muster radial ausgerichtete Schlitze auf, die als digitale Kodemuster zur Absolutwinkelmessung ausgebildet sind. Durch die gleichzeitige Auflösung gleich mehrerer Schlitze wird zwar eine hohe Auflösung beim Messen von Drehwinkeln erzielt, die erzielbare Messgenauigkeit ist aber unter anderem durch den Exzentrizitätsfehler begrenzt.

Aus der Einleitung der US 4,580,047 ist eine Winkelmesseinrichtung mit einem inkrementellen Schlitzmuster und zwei diametral einander gegenüberliegenden Abtaststellen mit je einer Abtasteinheit bekannt. Ober die zwei Abtaststellen werden zwei periodische Abtastsignale gemessen. Über die gegenseitige Phasenlage der beiden Abtastsignale kann ein Exzentrizitätsfehler des zu messenden Winkels, welcher aus einem Versatz des Drehkörpermittelpunkts zur Drehachse herrührt, mit hoher Genauigkeit bestimmt werden.

In der DE-OS 18 11 961 ist eine Anordnung zum Einstellen von Winkellagen beschrieben, die wenigstens ein Paar diametral einander gegenüberliegende Abtasteinheiten an wenigstens zwei Abtaststellen vorsieht. An den vier Abtaststellen werden vier durch eine vorliegende Exzentrizität bedingt gegeneinander phasenverschobene, periodische Abtastsignale gemessen, welche einander in analoger Form additiv überlagert werden, so dass unter anderem Exzentrizitätsfehler, beispielsweise der Lagerung der Teilscheibe, kompensiert werden können.

Aus der US 2004/118999 ist ein optischer Verschiebungssensor mit einer zweidimensionalen Anordnung von Sensorelementen bekannt. Das geoffenbarte Konzept verwendet die zweidimensionale Anordnungen für eine Bildverarbeitung, d.h. um die Orientierung von Kanten bzw. deren Lage bzw. Verlauf zu bestimmen, was zumindest die Kenntnis von zwei Punkten einer jeweiligen Kante in einer Ebene erfordert. Damit ist der Sensor nicht in der Lage, aus Distanzen zwischen in einem linienförmigen ortsauflösenden Bereich aufgelösten Positionen eine Exzentrizität oder deren Auswirkung zu bestimmen. Der geoffenbarte Ansatz benötigt hierfür notwendigerweise ein Bild.

Aufgabe der Erfindung ist es, Mängel des Standes der Technik zu beheben. So soll ein Verfahren für eine konstruktiv einfache Vorrichtung, die einen optischen Detektor mit einer Vielzahl aneinander gereihter Detektorelemente und einen Drehkörper mit einer Vielzahl in Drehrichtung hintereinander angeordneter Musterelemente aufweist, vorgeschlagen werden, welches Verfahren ein genaues Bestimmen eines Drehwinkels ermöglicht. Auch soll eine Vorrichtung, die einen optischen Detektor mit einer Vielzahl aneinander gereihter Detektorelemente und einen Drehkörper mit einer Vielzahl in Drehrichtung hintereinander angeordneter Musterelemente aufweist, vorgeschlagen werden, über die - trotz ihres einfachen konstruktiven Aufbaus - ein Drehwinkel genau bestimmbar ist.

Diese Aufgabe wird durch ein Verfahren und eine Vorrichtung zum genauen Bestimmen eines Drehwinkels mit den Merkmalen des Patentanspruchs 1 bzw. 6 gelöst.

Bei einem erfindungsgemässen Verfahren zum genauen Bestimmen eines Drehwinkels um eine Achse wird wenigstens ein Teil einer Vielzahl um ein Musterzentrum angeordneter Musterelemente, von denen eine Vielzahl in Drehrichtung hintereinander angeordnet sind, über optische Strahlen auf einer Vielzahl aneinander gereihter Detektorelemente eines optischen Detektors wenigstens teilweise abgebildet. Die Musterelemente sind auf einem Drehkörper angeordnet, der mit dem Detektor um die Achse drehbar verbunden ist. Über die Detektorelemente ein und desselben Detektors werden Positionen der abgebildeten Musterelemente aufgelöst. In einem ersten Schritt werden über aufgelöste Positionen wenigstens eines der Musterelemente Auswirkungen einer Exzentrizität des Musterzentrums zur Achse auf das Bestimmen eines Drehwinkels rechnerisch ermittelt. In einem zweiten Schritt wird unter Berücksichtigung der ermittelten Auswirkungen der Drehwinkel über die aufgelösten Positionen hintereinander angeordneter Musterelemente genau bestimmt.

In einer Weiterbindung des erfindungsgemässen Verfahrens werden bei dem ersten Schritt über einen Zwischenschritt hintereinander angeordnete Musterelemente zu wenigstens zwei Gruppen zusammengefasst und über die aufgelösten Einzelpositionen der jeweils zusammengefassten Musterelemente wenigstens zwei Gruppenpositionen rechnerisch ermittelt. Über die wenigstens zwei ermittelten Gruppenpositionen werden dann Auswirkungen der Exzentrizität auf das Bestimmen des Drehwinkels rechnerisch ermittelt. Über die ermittelten Gruppenpositionen kann dies mit höherer Genauigkeit erfolgen.

Eine erfindungsgemässe Vorrichtung zum genauen Bestimmen eines Drehwinkels weist einen optischen Detektor, der eine Vielzahl aneinander gereihter Detektorelemente umfasst, und einen Drehkörper auf, der eine Vielzahl um ein Musterzentrum angeordneter Musterelemente umfasst, von denen eine Vielzahl in Drehrichtung hintereinander angeordnet ist. Der Drehkörper ist mit dem Detektor um eine Achse drehbar verbunden. Über optische Strahlen ist wenigstens ein Teil der Musterelemente wenigstens teilweise auf Detektorelementen abbildbar. Positionen der abgebildeten Musterelemente sind über die Detektorelemente ein und desselben Detektors auflösbar. Die Musterelemente und die Detektorelemente sind bei dieser Vorrichtung derart ausgebildet und angeordnet, dass über aufgelöste Positionen wenigstens eines der Musterelemente Auswirkungen einer Exzentrizität des Musterzentrums zur Achse auf das Bestimmen eines Drehwinkels selbsttätig rechnerisch ermittelbar sind und über aufgelöste Positionen hintereinander angeordneter Musterelemente unter Berücksichtigung der Auswirkungen der Exzentrizität der Drehwinkel genau bestimmbar ist.

Da über ein und denselben Detektor sowohl die Auswirkungen einer Exzentrizität auf das Bestimmen des Drehwinkels rechnerisch ermittelbar als auch der Drehwinkel um eine Achse genau bestimmbar ist, können erfindungsgemässe Vorrichtungen zum genauen Bestimmen eines Drehwinkels mit hoher Auflösung mit verschiedensten Vorteilen realisiert werden. Zum einen kann eine einfache und kostengünstige Vorrichtung zum genauen Bestimmen eines Drehwinkels realisiert werden. Da das Ermitteln der Auswirkungen einer Exzentrizität und das Bestimmen des Drehwinkels unter Berücksichtigung der Auswirkungen über ein und denselben Detektor mit ein und demselben ortsauflösenden Bereich erfolgt, kann zudem eine hohe Genauigkeit und Robustheit einer derartigen Vorrichtung erzielt werden. Auch ist es möglich, beide Funktionen mit denselben zu derselben Zeit aufgelösten Positionen von Musterelementen auszuführen.

Weitere alternative oder vorteilhafte Aus- bzw. Weiterbildungen der Erfindung sind in den abhängigen Patentansprüchen beschrieben.

Nachstehend werden Ausführungsbeispiele erfindungsgemässer Vorrichtungen und Ausführungsformen erfindungsgemässer Verfahren zum genauen Bestimmen eines Drehwinkels anhand von Zeichnungen rein beispielhaft näher erläutert. Es zeigen in Teilansicht von oben:
- Figur 1: ein erstes Ausführungsbeispiel einer erfindungsgemässen Vorrichtung
- Figur 2: zwei schematische Darstellungen einer Vorrichtung zum Erörtern von Ausführungsformen erfindungsgemässer Verfahren,
- Figur 3: die Musterelemente und die Detektorelemente des ersten Ausführungsbeispiels,
- Figur 4: ein zweites Ausführungsbeispiel, bei dem die Detektorelemente die Musterelemente in Form einer Sekante schneiden,
- Figur 5: ein drittes Ausführungsbeispiel mit Musterelementen, die ein absolutes Bestimmen des Drehwinkels ermöglichen,
- Figur 6: zwei schematische Darstellungen einer weiteren Vorrichtung zum Erörtern alternativer Ausführungsformen erfindungsgemässer Verfahren,
- Figur 7: ein zum Musterzentrum symmetrisches Musterelement des ersten Ausführungsbeispiels,
- Figur 8: zwei zum Musterzentrum symmetrische Musterelemente des zweiten Ausführungsbeispiels,
- Figur 9: ein viertes Ausführungsbeispiel mit lichtundurchlässigen Musterelementen, von denen drei Musterelemente zum Musterzentrum symmetrisch sind,
- Figur 10: ein fünftes Ausführungsbeispiels mit lichtundurchlässigen Musterelementen und
- Figur 11: ein sechstes Ausführungsbeispiel mit dreieckförmigen Musterelementen.

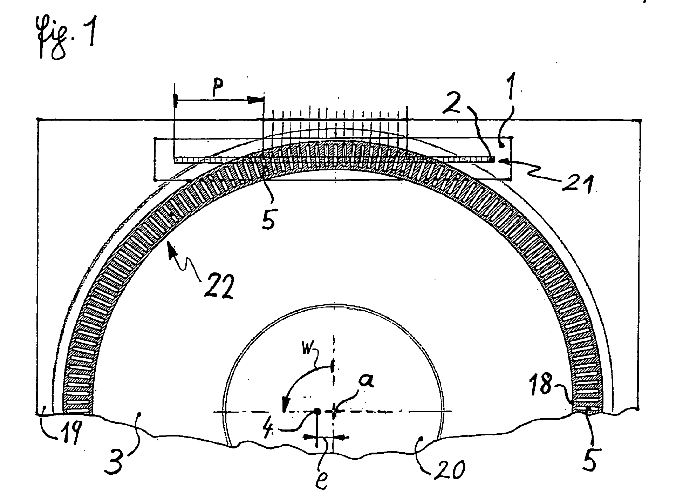

Figur 1 zeigt ein erstes Ausführungsbeispiel einer erfindungsgemäßen Vorrichtung zum genauen Bestimmen eines Drehwinkels w in einer Teilansicht von oben. Die beiden Winkelencoder eines Theodoliten könnten diesem Ausführungsbeispiel entsprechend ausgebildet sein. Das Ausführungsbeispiel umfasst einen Drehkörper, der hier als scheibenförmiger Glaskreis 3 ausgebildet ist, und einen optischen Detektor, der hier in allen Ausführungsbeispielen als auf CCD-Line-Array 1 ausgebildet ist. Die Erfindung ist natürlich weder CCD- noch auf Line-Array-Detektoren beschränkt. So könnte über beispielsweise einen entsprechenden CMOS-Area-Array-Detektor die Genauigkeit der Winkelbestimmung noch weiter erhöht werden. Der CCD-Line-Array 1 und ein in Figur 1 nicht sichtbares Lager sind an einer Grundplatte 19 fix befestigt. Über das Lager ist eine Welle 20 um eine Achse a drehbar mit der Grundplatte 19 und dem CCD-Line-Array 1 verbunden. Bei diesem Ausführungsbeispiel kann der Drehwinkel w der Welle 20 um die Achse a relativ zum CCD-Line-Array 1 innerhalb einer Genauigkeit von beispielsweise fünf Winkelsekunden bestimmt werden.

Der Glaskreis 3 weist hier ein kreisringförmiges Muster 22 mit einer Vielzahl in Drehrichtung hintereinander um ein Musterzentrum 4 angeordneter Musterelemente auf, die zum Musterzentrum 4 alle denselben Abstand aufweisen. Die Musterelemente sind in Form rechteckiger, lichtdurchlässiger Schlitze 5 ausgebildet und werden durch Ausnehmungen in einer kreisringförmig auf dem Glaskreis 3 applizierten, lichtundurchlässigen Materialschicht 18 verkörpert. Die lichtdurchlässigen Schlitze 5 sind hier radial ausgerichtet und in jeweils demselben Abstand zueinander angeordnet. Damit ist ein inkrementelles Bestimmen des Drehwinkels w möglich. Der Glaskreis 3 ist, beispielsweise über einen Kleber, fix an der Welle 20 befestigt. Bei einer Befestigung des Glaskreises 3 lässt sich in der Praxis ein Abstand zwischen der Achse a und dem Musterzentrum 4 - eine so genannte Exzentrizität e des Musterzentrums 4 zur Achse a - nicht verhindern. Bei einem Winkelencoder eines Theodoliten mit einem Glaskreis 3 von beispielsweise gut siebzig Millimetern Durchmesser liegt die Exzentrizität e typischerweise innerhalb einiger weniger Mikrometer. Zur besseren Anschaulichkeit sind in den Figuren die Exzentrizitäten e in mehr als tausendfacher Vergrösserung dargestellt. In der in Figur 1 gezeigten Stellung des Glaskreises 3 ist das Musterzentrum 4 zur Achse a in Erstreckungsrichtung des CCD-Line-Array 1 versetzt. In dieser Stellung des Glaskreises 3 sind die Auswirkungen der Exzentrizität e auf ein Bestimmen eines Drehwinkels w am grössten.

Der optische Detektor setzt sich aus einer Vielzahl - beispielsweise Tausende - lichtempfindlicher Detektorelemente 2 zusammen, die gemeinsam einen ortsauflösenden Bereich 21 bilden. Die einzelnen Detektorelemente 2 weisen beispielsweise eine Grösse von vierzehn mal vierzehn Mikrometern auf. Der ortsauflösende Bereich 21 weist hier gemäss einer Weiterbildung der Erfindung derartige Abmessungen auf, dass er sich wenigstens auf einer Seite über den abgebildeten Teil des kreisförmigen Musters 22 hinaus erstreckt. Beim CCD-Line-Array 1 sind die Detektorelemente 2 in Form einer einzigen geraden Linie im Wesentlichen in Drehrichtung aneinander gereiht und bilden so einen geradlinigen, ortsauflösenden Bereich 21, der senkrecht zur Radialrichtung ausgerichtet ist.

Über eine nicht dargestellte Lichtquelle werden optische Strahlen hier senkrecht zur Zeichnungsebene auf einen Bereich des kreisringförmigen Musters 22 projiziert. Dabei werden projizierte Strahlen von der lichtundurchlässigen Materialschicht 18 absorbiert oder können durch die lichtdurchlässigen Schlitze 5 hindurch treten, wodurch ein Teil des Musters 22 mit mehreren lichtdurchlässigen Schlitzen 5 auf dem ortsauflösenden Bereich 21 des CCD-Line-Array 1 als helle und dunkle Bereiche abgebildet wird. Über die lichtempfindlichen Detektorelemente 2 werden in an sich bekannter Weise den hellen Bereichen der abgebildeten lichtdurchlässigen Schlitze 5 Positionen p zugeordnet. Dabei entsprechen die aufgelösten Positionen p hier den Distanzen zwischen dem linksseitigen Ende des ortsauflösenden Bereichs 21 und den jeweiligen Schwerpunkten der hellen Bereiche der Schlitze 5. Es ist jedoch auch möglich, einem Musterelement auf Basis von Hell-Dunkel-Übergängen eine Position zuzuordnen.

Die aufgelösten Positionen p werden erfindungsgemäss zum Ermitteln der Auswirkungen der Exzentrizität e und zum anschliessenden genauen Bestimmen des Drehwinkels w an eine an sich bekannte, hier nicht dargestellte Rechen- und Auswerteeinheit weitergeleitet.

In den folgenden Figuren ist der Einfachheit halber von den unterschiedlichen Ausführungsbeispielen erfindungsgemässer Vorrichtungen jeweils nur mehr der ortsauflösende Bereich 21 mit den Detektorelementen 2 und ein Teil des jeweiligen Musters mit den jeweiligen Musterelementen dargestellt.

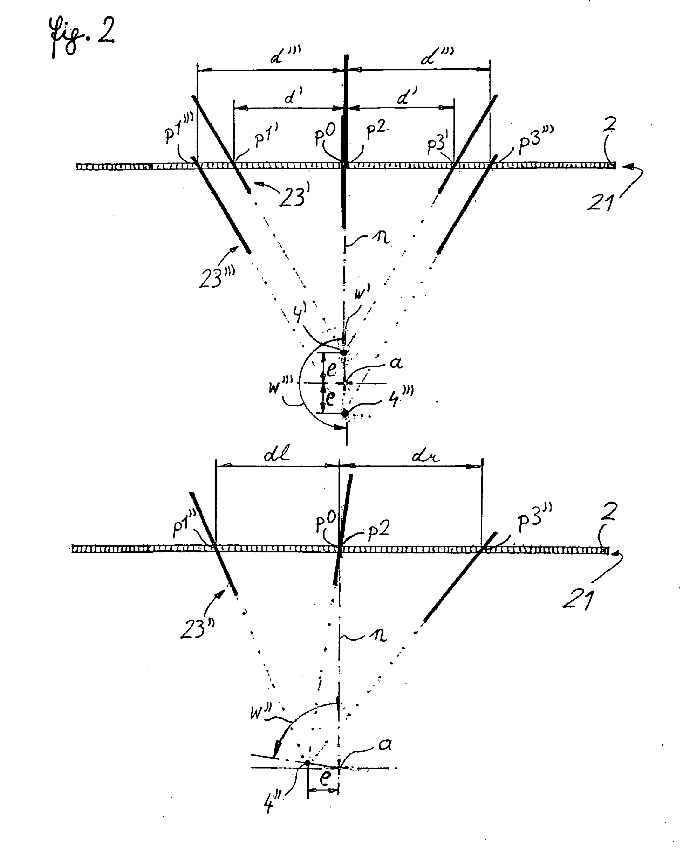

Figur 2 zeigt in zwei Teilfiguren zwei schematische Darstellungen mit einer dem ersten Ausführungsbeispiel entsprechenden Vorrichtung in drei verschiedenen Stellungen einer Halbdrehung. Die obere Teilfigur zeigt die Vorrichtung in Ausgangs- und Endstellung bei einem Drehwinkelwert w*'* bzw. w*'''* von null bzw. einhundertachtzig Grad. Die untere Teilfigur zeigt die Vorrichtung in Zwischenstellung bei einem Drehwinkelwert w*''* von nicht ganz neunzig Grad. Anhand der schematischen Darstellungen werden Ausführungsformen eines erfindungsgemässen Verfahrens zu einem genauen Bestimmen eines Drehwinkels rein beispielhaft erörtert. Bei diesen Verfahren werden die Auswirkungen der Exzentrizität e auf das Bestimmen eines Drehwinkels mit Hilfe hintereinander in Drehrichtung angeordneter Musterelemente rechnerisch ermittelt.

Die beiden schematischen Darstellungen zeigen zweimal den linienförmigen, ortsauflösenden Bereich 21 aus Figur 1 und drei Strichmuster 23*'*, 23*''* und 23*'''*. Die drei Strichmuster 23*'*, 23*''* und 23*'''* sind Ausschnitte ein und desselben Strichmusters in jeweils .einer der drei Stellungen. Das der Anschaulichkeit halber stark vereinfachte, inkrementell ausgebildete Strichmuster besteht hier aus jeweils zwölf zueinander gleich beabstandeten, strichförmigen Musterelementen, von denen hier jeweils nur drei dargestellt sind.

Die strichförmigen Musterelemente der drei Strichmuster 23*'*, 23*''* und 23*'''* weisen zum jeweiligen Musterzentrum 4*'*, 4*''* bzw. 4*'''* denselben Abstand auf und sind jeweils in Drehrichtung hintereinander angeordnet. Entsprechend dem ersten Ausführungsbeispiel weisen auch die drei Musterzentren 4*'*, 4*''* und 4*'''* jeweils die Exzentrizität e zur Achse a auf.

Bei einer ersten Ausführungsform eines erfindungsgemässen Verfahrens kann ein beliebiger Drehwinkel unter Ausnutzung der geometrischen Gegebenheiten dieser Vorrichtung über die aufgelösten Positionen p1*'*, p1*'''*, p2, p3*'* und p3*'''* des jeweils linken, mittleren und rechten Musterelements der Strichmuster 23*'* und 23*'''* wie folgt über zwei Schritte genau bestimmt werden.

In einem ersten Schritt werden - wie in der oberen Teilfigur der Figur 2 dargestellt - die Drehwinkelwerte w*'* und w*'''* der Ausgangs- und der Endstellung einer Halbdrehung derart gewählt, dass die beiden Distanzen d' zwischen den Positionen p2 und p1*'* und den Positionen p3' und p2 und die beiden Distanzen d*'''* zwischen den Positionen p2 und p1*'''* und den Positionen p3*'''* und p2 jeweils identisch sind. Derart liegen die beiden Musterzentren 4*'* und 4*'''* in einer Ebene n, die auf den ortsauflösenden Bereich 21 senkrecht steht und in welcher die Achse a liegt. In der Ausgangsstellung liegt dabei das Musterzentrum 4*'* zwischen dem ortsauflösenden Bereich 21 und der Achse a, während in der Endstellung eine Halbdrehung später die Achse a zwischen dem ortsauflösenden Bereich 21 und dem Musterzentrum 4*'''* liegt. Dadurch hat die Exzentrizität e weder auf das Bestimmen des Drehwinkelwerts w*'* noch des Drehwinkelwerts w*'''* Auswirkungen. In der Endstellung ist das Strichmuster 23*'''* relativ zum Strichmuster 23*'* der Ausgangsstellung nur senkrecht zum ortsauflösenden Bereich 21 versetzt.

Die hier in der Ebene n liegende, aufgelöste Position p2 des jeweils mittleren Musterelements bleibt dadurch unverändert, während sich bei dem jeweiligen nicht senkrecht zum ortsauflösenden Bereich 21 ausgerichteten, linken und rechten Musterelement die Positionen p1*'* und p3*'* in die Positionen p1*'''* und p3 *'''* verändern.

Durch einen Vergleich der aufgelösten Positionen p1*'* und p1*'''* und/oder der Positionen p3*'* und p3*'''* beider Stellungen des linken und/oder des rechten Musterelements kann der Betrag der Exzentrizität e rechnerisch ermittelt werden. Basierend auf den hier dargestellten geometrischen Gegebenheiten entspricht der Betrag der Exzentrizität e der halben Differenz zwischen der jeweils aufgelösten Position p1*'* und p1*'''* des linken Musterelements multipliziert mit dem Tangens des Winkels von sechzig Grad, der Winkeldifferenz zwischen den Erstreckungsrichtungen des linken Musterelements und des ortsauflösenden Bereichs 21. Da hier die Gegebenheiten für das rechte Musterelement dieselben sind, kann durch eine zusätzliche Berücksichtigung der Differenz zwischen den aufgelösten Position p3*'* und p3*'''* bei der rechnerischen Ermittlung die Genauigkeit der Exzentrizität e gesteigert werden. Es liegt auf der Hand, dass bei einem feineren Muster mit weiteren auf dem ortsauflösenden Bereich abgebildeten Musterelementen die Genauigkeit der rechnerischen Ermittlung noch weiter gesteigert werden könnte.

In an sich bekannter Weise sind die Auswirkungen der Exzentrizität e bei einem Bestimmen eines beliebigen Drehwinkels proportional zum Betrag der ermittelten Exzentrizität e multipliziert mit dem Sinus des beliebigen Drehwinkels relativ zu einem Bezugswinkel, bei dem die Exzentrizität e keine Auswirkungen auf das Bestimmen eines Drehwinkels hat. Mit der Kenntnis der Ausgangs- und der Endstellung sowie dem Betrag der Exzentrizität e lassen sich hier nun die Auswirkungen der Exzentrizität e auf das Bestimmen eines beliebigen Drehwinkels rechnerisch ermitteln.

In einem zweiten Schritt kann nun unter Berücksichtigung der ermittelten Auswirkungen jeder beliebige Drehwinkel über die dann aufgelösten Positionen des linken, des mittleren und des rechten strichförmigen Musterelements relativ zu einer Bezugsposition p0 auf dem ortsauflösenden Bereich 21 genau bestimmt werden. Die Bezugsposition p0 liegt hier ebenfalls in der Ebene n und fällt mit der aufgelösten Position p2 zusammen. Beim genauen Bestimmen über die aufgelösten Positionen der abgebildeten Musterelemente relativ zur Bezugsposition p0 wird eine nichtlineare Verzerrung der aufgelösten Positionen, welche auf die geradlinige Anordnung der Detektorelemente 2 und die nicht-geradlinige Anordnung der hintereinander um das jeweilige Musterzentrum 4*'* und 4*''* herum angeordneten Musterelemente zurückgeht, in an sich bekannter Weise rechnerisch relativ zur Bezugsposition p0 entzerrt.

Bei einer zweiten Ausführungsform eines erfindungsgemässen Verfahrens wird beispielsweise während einer Volldrehung bei jedem Auflösen der vorgegebenen Position p1*'''* aus der oberen Teilfigur des jeweils linken Musterelements die aufgelöste Position des jeweils rechten Musterelements aufgezeichnet, um anschliessend über eine Ausgleichsrechnung, die den geometrischen Gegebenheiten der Vorrichtung Rechnung trägt, den Betrag der Exzentrizität e sowie den zugeordneten Bezugswinkel rechnerisch zu ermitteln. Mit diesen beiden rechnerisch ermittelten Werten kann dann jeder Drehwinkel unter Berücksichtigung der Auswirkungen der Exzentrizität e genau bestimmt werden.

Bei einer dritten Ausführungsform eines erfindungsgemässen Verfahrens kann ausgehend von der Kenntnis der Lage der Ebene n, ein Drehwinkel wie folgt genau bestimmt werden. Wird - wie in der unteren Teilfigur der Figur 2 dargestellt - der Drehwinkelwert w*''* der Zwischenstellung von nicht ganz 90 Grad derart gewählt, dass die Position p2 des mittleren der drei Musterelemente an der Bezugsposition p0 aufgelöst wird, so werden über die Detektorelemente 2 die Positionen p1*''* und p3*''* des linken bzw. rechten Musterelements aufgelöst.

Aufgrund der geometrischen Gegebenheiten der hintereinander angeordneten Musterelemente können hier aus dem Verhältnis der Distanzen dl zu dr zwischen den Positionen p2 und p1*''* bzw. Positionen p3*''* und p2 direkt die Auswirkungen der Exzentrizität e auf das Bestimmen des Winkelwerts w*''* rechnerisch ermittelt werden. Unter Berücksichtigung der derart rechnerisch ermittelten Auswirkungen der Exzentrizität e kann anschliessend aufgrund der aufgelösten Positionen p1*''*, p2 und p3*''* relativ zur Bezugsposition p0 der Drehwinkelwert w*''* genau bestimmt werden. Bei Kenntnis der Ebene n kann diese Ausführungsform des Verfahrens auch für Positionen des mittleren Musterelements abseits der Bezugsposition p0 angewendet werden. Auch hier ist es möglich, mit weiteren auf dem ortsauflösenden Bereich abgebildeten Musterelementen eines feineren Musters die Genauigkeit der rechnerischen Ermittlung noch weiter zu steigern.

Bezug nehmend auf einen Winkelencoder eines Theodoliten entsprechend dem ersten Ausführungsbeispiel aus Figur 1 könnte beispielsweise bei einer Halbdrehung - entsprechend Figur 2 - die Differenz zwischen den beiden dabei aufgelösten Positionen p des äusserst linken Musterelements 5 zwei Mikrometern betragen. Da die Erstreckungsrichtung des äusserst linken Musterelements 5 und die Erstreckungsrichtung des ortsauflösenden Bereich 21 eine Winkeldifferenz von 75 Grad aufweisen, würde die Exzentrizität e des Musterzentrums 4 zur Achse a in etwa*'* einen Betrag von nicht ganz vier Mikrometern aufweisen. Die anderen auf dem ortsauflösenden Bereich 21 liegenden Musterelemente 5 könnten selbstverständlich zur Steigerung der Genauigkeit für die rechnerische Ermittlung der Exzentrizität e zusätzlich herangezogen werden. Aus geometrischen Gründen wäre die Differenz zwischen den jeweils aufgelösten Positionen umso kleiner, je näher die Winkeldifferenz zwischen den Erstreckungsrichtungen des jeweiligen Musterelements 5 und des ortsauflösenden Bereichs 21 bei einem Winkelwert von 90 Grad liegt.

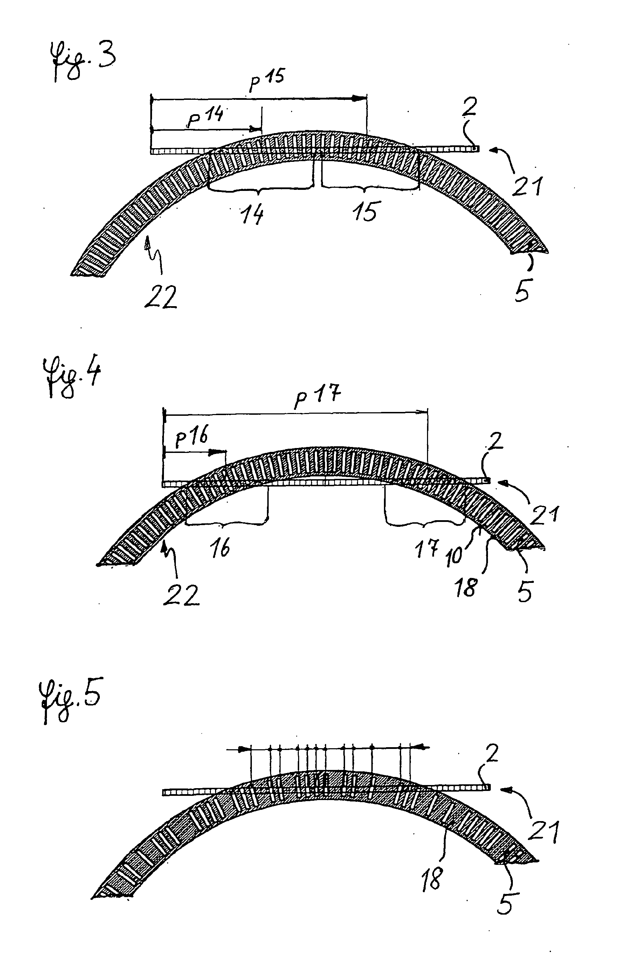

Figur 3 zeigt den ortsauflösenden Bereich 21 mit den Detektorelementen 2 und einen Ausschnitt des kreisförmigen Musters 22 mit den Schlitzen 5 des ersten Ausführungsbeispiels. Anhand dieser Figur wird eine vierte Ausführungsform eines erfindungsgemässen Verfahrens erörtert.

Zum rechnerischen Ermitteln der Auswirkungen einer Exzentrizität auf das Bestimmen eines Drehwinkels werden bei diesem Verfahren in einem ersten Schritt die Schlitze 5 hier zu einer linken und einer rechten Gruppe 14 und 15 mit jeweils etwa zehn Schlitzen 5 zusammengefasst. In einem zweiten Schritt wird den beiden aneinander grenzenden Gruppen 14 und 15 unter rechnerischer Berücksichtigung der nichtlinearen Verzerrung, die auf die geradlinige Anordnung der Detektorelemente 2 und die nicht-geradlinige Anordnung der um das Musterzentrum herum hintereinander angeordneten Schlitze 5 zurückgeht, jeweils eine mittlere Gruppenposition p14 bzw. p15 zugeordnet. In einem dritten Schritt können dann die Auswirkungen einer Exzentrizität e auf das Bestimmen des Drehwinkels über die beiden aufgelösten Gruppenpositionen p14 und p15 analog zur beispielsweise zweiten Ausführungsform eines erfindungsgemässen Verfahrens rechnerisch ermittelt werden. Danach kann das Bestimmen des Drehwinkels unter Berücksichtigung der ermittelten Auswirkungen der Exzentrizität in bereits erwähnter Weise erfolgen.

Es wäre aber auch denkbar, anstelle der mittleren Gruppenpositionen beispielsweise die Randpositionen der Gruppen als Gruppenpositionen vorzusehen. Ebenso wäre es denkbar, die Positionen von mehr als zwei Gruppen zu bestimmen. Das Zusammenfassen hintereinander angeordneter Musterelemente zu Gruppen und das rechnerische Ermitteln deren jeweiliger Gruppenposition bieten Vorteile in Bezug auf die erzielbare Genauigkeit beim rechnerischen Ermitteln der Auswirkungen.

Figur 4 zeigt ein zweites Ausführungsbeispiel einer erfindungsgemässen Vorrichtung, welches bis auf die Anordnung des ortsauflösenden Bereichs 21 identisch mit dem ersten Ausführungsbeispiel ist. Der durch die Detektorelemente 2 gebildete ortsauflösende Bereich 21 ist hier im Vergleich zum ersten Ausführungsbeispiel in einem geringeren Abstand zur Achse a aus Figur 1 angeordnet. Anhand dieser Figur wird die vierte Ausführungsform eines Verfahrens zum genauen Bestimmen für - im Gegensatz zur Figur 3 - voneinander beabstandete Gruppen 16 und 17 hintereinander angeordneter Musterelemente erörtert.

Durch den geringeren Abstand wird das kreisförmige Muster 22 mit den Schlitzen 5 vom ortsauflösenden Bereich 21 auch von der Innenlinie 10 der lichtundurchlässigen Materialschicht 18 geschnitten. Dabei werden mehrere Schlitze 5 auf zwei voneinander getrennten Abschnitten des ortsauflösenden Bereichs 21 abgebildet.

Zwischen den beiden Abschnitten befindet sich eine Vielzahl von Detektorelementen 2, auf denen kein Muster abgebildet wird, wodurch die beiden beabstandeten Gruppen 16 und 17 beidseitig durch auf den Detektorelementen 2 nicht abgebildete, hintereinander angeordnete Schlitze 5 voneinander beabstandet sind.

Durch die hier näher zur Achse a aus Figur 1 positionierten Detektorelemente 2 können, verglichen mit dem ersten Ausführungsbeispiel in Figur 3, weiter auseinander liegende Gruppenpositionen p16 und p17 zu Gruppen zusammengefasster Schlitze 5 aufgelöst werden. Dadurch wird eine genauere rechnerische Ermittlung der Auswirkungen der Exzentrizität auf das Bestimmen eines Drehwinkels ermöglicht.

Figur 5 zeigt ein drittes Ausführungsbeispiel einer erfindungsgemässen Vorrichtung, welches bis auf die Anordnung der Schlitze 5 innerhalb der kreisringförmigen, lichtundurchlässigen Materialschicht 18 identisch mit dem ersten Ausführungsbeispiel ist. Die Schlitze 5 sind im Gegensatz zu den vorherigen Ausführungsbeispielen in unterschiedlichen Abständen zueinander angeordnet. Über diese Anordnung erfolgt hier eine Codierung, die es ermöglicht, über Abstände zwischen mehreren hintereinander angeordneten Schlitzen 5 jeder Stellung der Vorrichtung jeweils eindeutig einen Drehwinkel zuzuordnen und damit den Drehwinkel absolut zu bestimmen. Selbstverständlich wären auch andere Möglichkeiten der Codierung - beispielsweise eine Variation der Breite der Schlitze 5 - denkbar. Da die unterschiedlichen Abstände zwischen den jeweiligen Schlitzen 5 bekannt sind, kann jeder Drehwinkel mit einer einzigen Abbildung mehrerer Schlitze 5 absolut in Bezug auf die Detektorelemente 2 bestimmt werden. Bei allen Ausbildungsbeispielen und Ausführungsformen erfindungsgemässer Vorrichtungen bzw. Verfahren zum genauen Bestimmen eines Drehwinkels können die auf die Detektorelemente 2 wenigstens teilweise abzubildenden Muster grundsätzlich in codierter Form ausgebildet sein.

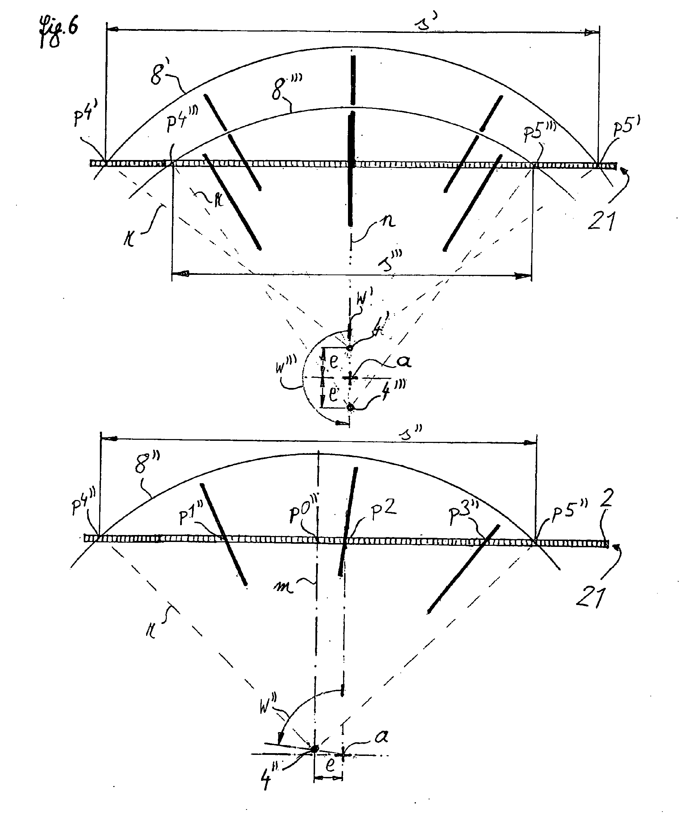

Figur 6 zeigt die beiden schematischen Darstellungen der Vorrichtung aus Figur 2 in denselben drei Stellungen bei den Drehwinkelwerten w*'*, w*''* und w*'''*, wobei das Strichmuster mit den zwölf hintereinander um das Musterzentrum angeordneten Musterelementen hier zusätzlich mit einem zu demselben Musterzentrum symmetrischen Musterelement versehen ist. Dieses zum Musterzentrum symmetrische Musterelement ist hier in Form eines Kreises ausgebildet. Drei Kreisbögen 8*'*, 8*''* und 8*'''*sind Ausschnitte ein und desselben Kreises in jeweils einer der drei Stellungen. Der Radius r des Kreises ist dabei derart gewählt, dass der ortsauflösende Bereich 21 den Kreis in Form einer Sekante schneidet. Anhand der beiden schematischen Darstellungen werden alternative Ausführungsformen eines erfindungsgemässen Verfahrens zum genauen Bestimmen eines Drehwinkels rein beispielhaft erörtert. Bei diesen Verfahren werden im Gegensatz zu den vorherigen Verfahren die Auswirkungen der Exzentrizität e mit Hilfe des symmetrischen Musterelements rechnerisch ermittelt.

Bei einer fünften Ausführungsform eines erfindungsgemässen Verfahrens kann ein beliebiger Drehwinkel unter Ausnutzung der geometrischen Gegebenheiten dieser Vorrichtung über die aufgelösten Positionen p4', p4''', p5' und p5''' der Kreisbögen 8' und 8'" wie folgt genau bestimmt werden.

Werden - wie in der oberen Teilfigur der Figur 6 dargestellt - die Drehwinkelwerte w' und w''' der Ausgangs-und der Endstellung der Halbdrehung derart gewählt, dass die Sehnenlänge s' zwischen den Positionen p4' und p5' maximal bzw. die Sehnenlänge s*'''* zwischen den Positionen p4*'''* und p5*'''* minimal ist, so liegen die beiden Musterzentren 4' und 4*'''* in der Ebene n, die auf den ortsauflösenden Bereich 21 senkrecht steht und in welcher die Achse a liegt. Dadurch hat hier die Exzentrizität e weder auf das Bestimmen des Drehwinkelwerts w' noch des Drehwinkelwerts w*'''* Auswirkungen.

Durch einen Vergleich der Sehnenlängen s*'* und s*'''* der Kreisbögen 8*'* und 8*'''* beider Stellungen kann der Betrag der Exzentrizität e basierend auf dem bekannten Radius r und dem Satz von Pythagoras rechnerisch ermittelt werden. Es liegt auf der Hand, dass bei einem aufwändigeren Muster mit weiteren auf dem ortsauflösenden Bereich 21 abgebildeten zum Musterzentrum symmetrischen Musterelementen die Genauigkeit der rechnerischen Ermittlung noch weiter gesteigert werden könnte.

Bei einer sechsten Ausführungsform eines erfindungsgemässen Verfahrens wird - in analoger Weise zur zweiten Ausführungsform - während einer Volldrehung bei mehreren - beispielsweise sechs oder zwölf - Drehwinkeln jeweils wenigstens eine aufgelöste Position des Kreises oder die Sehnenlänge aufgezeichnet. Da zwischen der Position bzw. der Sehnenlänge und der Exzentrizität e ein eindeutiger funktionaler Zusammenhang besteht, kann über eine Ausgleichsrechnung der Betrag der Exzentrizität e sowie der Bezugswinkel für den Drehwinkel rechnerisch ermittelt werden, wodurch ein beliebiger Drehwinkel unter Berücksichtigung der Auswirkungen der Exzentrizität e genau bestimmt werden kann.

Bei einer siebten Ausführungsform eines erfindungsgemässen Verfahrens kann aufgrund der auf dem ortsauflösenden Bereich 21 abgebildeten Teile des Kreises unter Berücksichtigung der Exzentrizität e ein beliebiger Drehwinkel wie folgt genau bestimmt werden.

In der Zwischenstellung mit dem Drehwinkelwert w*''* von nicht ganz 90 Grad werden - wie in der unteren Teilfigur der Figur 6 dargestellt - die beiden Positionen p4'' und p5*''* des Kreisbogens 8" über die Detektorelemente 2 aufgelöst. Durch Mittelwertbildung der beiden aufgelösten Positionen p4" und p5" kann hier die momentane Bezugsposition p0" für die aufgelösten Positionen p1", p2 und p3" der hintereinander angeordneten, strichförmigen Musterelemente für das genaue Bestimmen des Drehwinkelwerts w*''* rechnerisch ermittelt werden.

Das Musterzentrum 4" liegt nun in einer Ebene m, die auf den ortsauflösenden Bereich 21 senkrecht steht und in welcher die ermittelte Bezugsposition p0*''* liegt, wodurch die Exzentrizität e auf ein Bestimmen des Drehwinkelwerts w*''* keine Auswirkungen mehr hat. Ein Ermitteln des Betrags der Exzentrizität e sowie des zugeordneten Bezugswinkels ist dadurch gar nicht mehr notwendig.

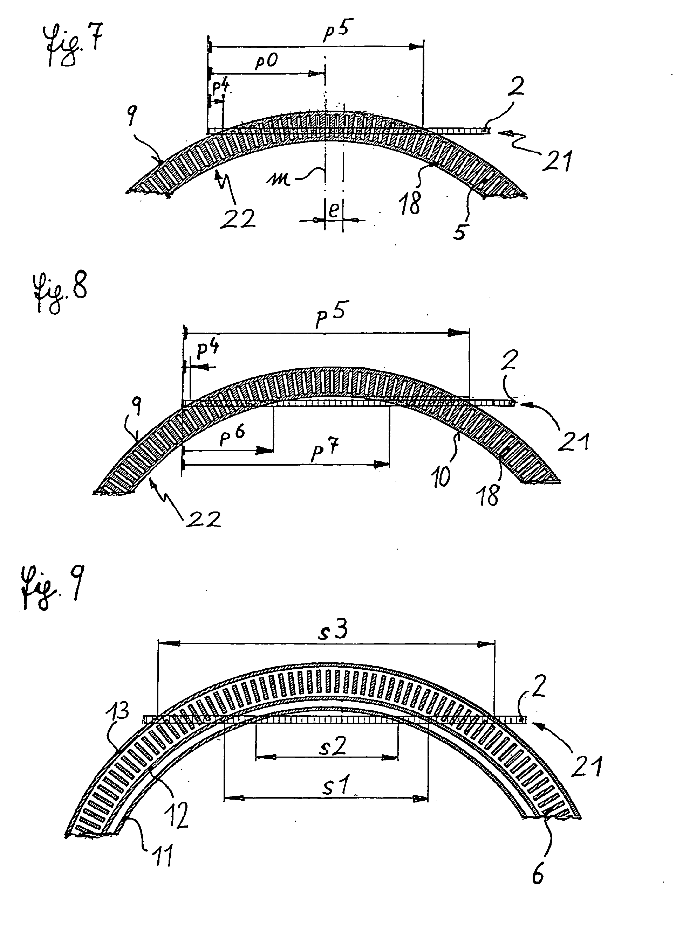

Figur 7 zeigt das kreisringförmige Muster 22 und den ortsauflösenden Bereich 21 des ersten Ausführungsbeispiels in der in Figur 1 gezeigten Stellung. Dabei ist - hier nicht dargestellt - das Musterzentrum 4 zur Achse a in Erstreckungsrichtung des ortsauflösenden Bereich 21 versetzt. In dieser Stellung sind die Auswirkungen der Exzentrizität e auf ein Bestimmen eines Drehwinkels am grössten.

Diese Auswirkungen werden hier - gemäss der siebten Ausführungsform eines erfindungsgemässen Verfahrens - nicht über die aufgelösten Positionen der hintereinander angeordneten Schlitze 5, sondern über die aufgelösten Positionen p4 und p5 eines zum Musterzentrum symmetrischen, kreisförmigen Musterelements rechnerisch ermittelt. Das kreisförmige Musterelement wird hier durch eine scharf begrenzende Aussenlinie 9 der lichtundurchlässigen Materialschicht 18 des kreisringförmigen Musters 22 verkörpert.

Über die Detektorelemente 2 werden die Positionen p4 und p5 der beiden Hell-Dunkelübergänge der abgebildeten Aussenlinie 9 aufgelöst und durch Mittelwertbildung die momentane Bezugsposition p0 rechnerisch ermittelt. Da hier sowohl die momentane Bezugsposition p0 als auch das nicht dargestellte Musterzentrum der Musterelemente in der auf den Detektorbereich 21 senkrecht stehenden Ebene m liegen, sind bei einem Bestimmen des momentanen Drehwinkels die Auswirkungen der Exzentrizität e über die momentane Bezugsposition p0 für die aufgelösten Positionen der abgebildeten Schlitze 5 bereits berücksichtigt. Ein separates rechnerisches Ermitteln der Exzentrizität e oder des zugeordneten Bezugswinkels ist derart nicht mehr notwendig. Dies ist vor allem bei zeitlich veränderlichen Exzentrizitäten - beispielsweise durch zeitlich veränderliche, mechanische Belastungen der Vorrichtung - von grosser Bedeutung.

Figur 8 zeigt das kreisringförmige Muster 22 und den ortsauflösenden Bereich 21 des zweiten Ausführungsbeispiels aus Figur 4 in der in Figur 1 gezeigten Stellung, bei dem der ortsauflösenden Bereichs 21 mit den Detektorelementen 2 im Vergleich zum ersten Ausführungsbeispiel in einem geringeren Abstand zur Achse angeordnet ist. Dadurch können hier nicht nur - wie in Figur 7 - die beiden Positionen p4 und p5 der Aussenlinie 9 sondern auch die beiden Positionen p6 und p7 der scharf begrenzenden Innenlinie 10 der lichtundurchlässigen Materialschicht 18 des kreisringförmigen Musters 22 aufgelöst und zusätzlich bei einem rechnerischen Ermitteln der Auswirkungen der Exzentrizität herangezogen werden. Damit kann die Genauigkeit beim Ermitteln der Auswirkungen gesteigert werden.

Figur 9 zeigt ein viertes Ausführungsbeispiel einer erfindungsgemässen Vorrichtung mit einem weiteren Muster, wobei der ortsauflösender Bereich 21 mit den Detektorelementen 2 - im Vergleich zum zweiten Ausführungsbeispiel - einen noch geringeren Abstand zur hier nicht dargestellten Achse a aufweist. Das weitere Muster weist hier einerseits als lichtundurchlässige Balken 6 ausgebildete in Drehrichtung hintereinander um das Musterzentrum angeordnete Musterelemente und andererseits drei als lichtundurchlässige, konzentrische Kreisringe 11, 12 und 13 ausgebildete zum Musterzentrum symmetrische Musterelemente auf, die jeweils durch einen Abstand voneinander getrennt sind.

Die rechnerische Ermittlung des Betrags der Exzentrizität e erfolgt hier, indem die Änderung der über die Detektorelemente 2 aufgelösten Länge der Sehne einer Sekante durch einen der Kreisringe 11, 12 und 13 in unterschiedlichen Stellungen für unterschiedliche Drehwinkel gemessen wird. Da zwischen den jeweiligen Sehnenlängen s1, s2 und s3 und der Exzentrizität e ein eindeutiger funktionaler Zusammenhang besteht, kann die Exzentrizität e - gemäss der sechsten Ausführungsform eines erfindungsgemässen Verfahrens - für jeden Drehwinkel durch Aufzeichnung der jeweiligen Sehnenlängen s1, s2, s3 als Funktion des Drehwinkels in einem Kalibrierprozess ermittelt werden.

Die Sensitivität der Messung ist dabei umso grösser, je kleiner der Abstand der Sekante von der Peripherie des zum Musterzentrum symmetrischen Musterelements - hier einen der Kreisringe 11, 12 und 13 - ist. Beispielsweise ändert sich bei einem dünnen Kreisring mit einem Radius von etwa 35 Millimetern und einem davon zweieinhalb Millimeter beabstandeten ortsauflösenden Bereich 21 die Sehnenlänge um plus/minus fünf Mikrometer pro Mikrometer Betrag der Exzentrizität und bei einem Abstand von einem Zehntel Millimeter sogar um plus/minus 26 Mikrometer pro Mikrometer Betrag der Exzentrizität.

Wie aus Figur 9 ersichtlich, werden hier die Sehnenlängen mehrerer Sekanten durch die drei Kreisringe 11, 12, 13 gemessen. Dabei können die Schnittpunkte der Sekanten mit sowohl den jeweiligen Aussenlinien, als auch den jeweiligen Innenlinien der drei dünnen Kreisringe 11, 12, 13 zur Sehnenlängenbestimmung verwendet werden. Damit kann der Betrag der Exzentrizität e basierend auf mehreren Werten rechnerisch ermittelt werden. Selbstverständlich kann bei der rechnerischen Ermittlung der Exzentrizität und/oder deren Auswirkungen auf ein Bestimmen des Drehwinkels zusätzlich auch noch die Information aus den aufgelösten Positionen der in Drehrichtung hintereinander angeordneten Musterelemente - hier der Balken 6 - berücksichtigt werden.

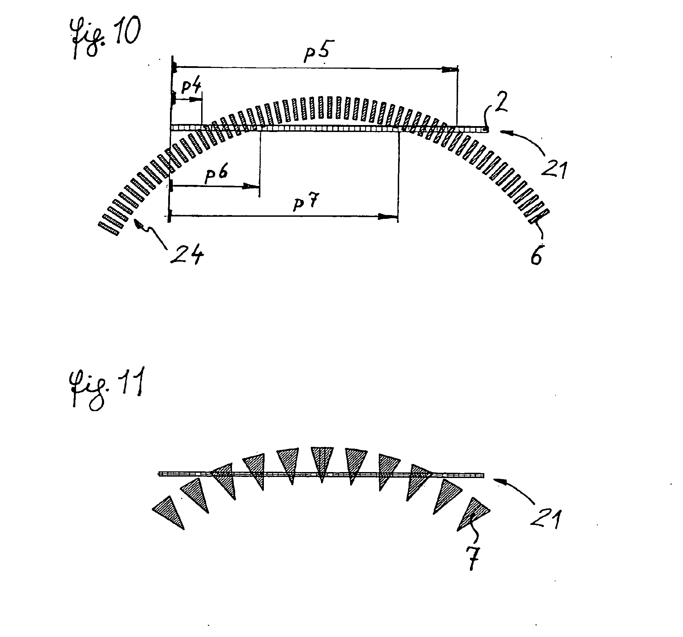

Figur 10 zeigt ein fünftes Ausführungsbeispiel, das sich nur durch das hier als Balkenmuster 24 ausgebildete Muster vom zweiten Ausführungsbeispiel aus Figur 4 unterscheidet. Das Balkenmuster 24 weist hier ebenfalls eine Vielzahl identischer, im selben Abstand zueinander in Drehrichtung hintereinander um ein Musterzentrum angeordneter Musterelemente auf, die jedoch hier als lichtundurchlässige, radial ausgerichtete Balken 6 ausgebildet sind. Über zwischen den Balken 6 hindurch tretende Strahlen wird ein Teil des Balkenmusters 24 als helle und dunkle Bereiche auf den lichtempfindlichen Detektorelementen 2 abgebildet.

Zudem bilden die nach aussen und die nach innen gerichteten Stirnseiten der Balken 6 zwei konzentrische, diskontinuierliche Kreislinien, die zum Musterzentrum symmetrische Musterelemente verkörpern. Über die Detektorelemente 2 lassen sich hier, insbesondere während einer Drehung des Balkenmusters 24, die Positionen p4, p5, p6 und p7 der Ein- und Austritte der jeweiligen Balken 6 in bzw. aus dem ortsauflösenden Bereich 21 auflösen. Mit den auf diese Weise aufgelösten Positionen p4, p5, p6 und p7 können dann die Auswirkungen der Exzentrizität auf ein Bestimmen des Drehwinkels rechnerisch ermittelt werden.

Anschliessend können bei einem Bestimmen eines Drehwinkels entweder die Positionen der abgebildeten Balken 6 über die Hell-Dunkel-Übergänge oder die Positionen deren Zwischenräume über die hellen Bereiche zwischen den Balken 6 aufgelöst werden.

Figur 11 zeigt ein sechstes Ausführungsbeispiel, das sich vom ersten Ausführungsbeispiel nur durch eine andere Ausbildung des Musters, insbesondere der radial zum Musterzentrum hin ausgerichteten, in Drehrichtung hintereinander angeordneten Musterelementen, unterscheidet. Das Muster wird hier durch lichtundurchlässige Dreiecke 7 auf dem nur in Figur 1 dargestellten lichtdurchlässigen Glaskreis 3 ausgebildet. Der um die Achse drehbare Drehkörper könnte jedoch auch beispielsweise in Form einer dünnen Metallscheibe ausgebildet sein, der hier dreieckförmige Ausnehmungen aufweist, welche die in Drehrichtung hintereinander angeordneten Musterelemente verkörpern.

Eine - beispielsweise dreieckige - Ausführung der Musterelemente, bei der einander zugewandte Seitenlinien benachbarter, hintereinander angeordneter Musterelemente wesentlich gegen die Radialrichtung geneigt ausgebildet sind, weist durch die zusätzliche Neigung gegen die Radialrichtung eine grössere Sensitivität in Bezug auf ein Ermitteln einer Exzentrizität durch den ortsauflösenden Bereich 21 auf. Sie ermöglicht theoretisch sogar ein Ermitteln der Exzentrizität e über ein Auflösen der Breite eines einzigen Dreiecks 7. Selbstverständlich ist es auch möglich, die Exzentrizität über die Abstände zwischen den Dreiecken 7 zu ermitteln. Durch die hier dreieckförmige Form der in Richtung des Musterzentrums gerichteten Musterelemente können hier hingegen - im Vergleich zu rechteckförmigen Musterelementen vorheriger Ausführungsbeispiele - weniger hintereinander angeordnete Musterelemente vorgesehen werden, wodurch eine geringere Auflösung erzielbar ist.

Es sind auch Weiterbildungen der Erfindung denkbar, bei denen wenigsten ein weiterer, gegebenenfalls diametral angeordneter, Detektor vorgesehen ist. Über die zusätzliche Information der aufgelösten Positionen des weiteren Detektors könnten andere Fehlerquellen als die Exzentrizität, beispielsweise Taumelfehler der Achse, unwirksam gemacht werden. Selbstverständlich können durch die zusätzliche Information des wenigstens einen weiteren Detektors auch die Auswirkungen der Exzentrizität noch genauer ermittelt werden.

## Patentansprüche

1. Verfahren zum genauen Bestimmen eines Drehwinkels (w) über einen optischen Detektor (1) mit einer Vielzahl aneinander gereihter Detektorelemente (2) mit einem linienförmigen ortsauflösenden Bereich (21) und über einen Drehkörper (3) mit einer Vielzahl um ein Musterzentrum (4) angeordneter Musterelemente (5, ..., 13), von denen eine Vielzahl in Drehrichtung hintereinander angeordnet ist, welcher Drehkörper (3) mit dem Detektor (1) um eine Achse (a) drehbar verbunden ist, bei welchem Verfahren
- wenigstens ein Teil der Musterelemente (5, ..., 13) über optische Strahlen wenigstens teilweise auf Detektorelementen (2) abgebildet werden, und
- über die Detektorelemente (2) ein und desselben Detektors (1) Positionen (p) der abgebildeten Musterelemente (5, ..., 13) aufgelöst werden,
**dadurch gekennzeichnet, dass**
- anhand von Distanzen zwischen den im linienförmigen ortsauflösenden Bereich (21) aufgelösten Positionen (p) wenigstens eines der Musterelemente (5, ..., 13) Auswirkungen einer Exzentrizität (e) des Musterzentrums (4) zur Achse (a) auf das Bestimmen eines Drehwinkels rechnerisch ermittelt werden, und dass
- über aufgelöste Positionen (p1, p2, p3) mehrerer hintereinander angeordneter Musterelemente (5, 6, 7) unter Berücksichtigung der ermittelten Auswirkungen der Drehwinkel (w) genau bestimmt wird.

2. Verfahren nach Anspruch 1, bei dem
- hintereinander angeordnete Musterelemente (5) zu wenigstens zwei Gruppen (14, ..., 17) zusammengefasst werden,
- über die aufgelösten Positionen der jeweils zusammengefassten Musterelemente (5) wenigstens zwei Gruppenpositionen (p14, ..., p17) rechnerisch ermittelt werden, und
- über die wenigstens zwei ermittelten Gruppenpositionen (p14, ..., p17) die Auswirkungen der Exzentrizität (e) auf das Bestimmen eines Drehwinkels rechnerisch ermittelt werden.

3. Verfahren nach Anspruch 2, wobei die wenigstens zwei Gruppen (16, 17) durch zwischen den Gruppen angeordnete Musterelemente (5) voneinander beabstandet sind.

4. Verfahren nach einem der Ansprüche 1 bis 3, wobei wenigstens eines der Musterelemente (8, ..., 13) zum Musterzentrum (4) symmetrisch, beispielsweise kreisförmig, ausgebildet ist, bei welchem Verfahren
- Positionen (p4, ..., p7) des wenigstens einen abgebildeten, symmetrischen Musterelements (8, ..., 13) aufgelöst wird, und
- die Auswirkungen der Exzentrizität (e) auf das Bestimmen eines Drehwinkels mit Hilfe der aufgelösten Positionen (p4, ,.., p7) des abgebildeten, symmetrischen Musterelements (8, ..., 13) rechnerisch ermittelt werden.

5. Verfahren nach Anspruch 1, wobei einander zugewandte Seitenlinien benachbarter, hintereinander angeordneter Musterelemente (7) gegen die Radialrichtung geneigt sind, bei welchem Verfahren
- über die Detektorelemente (2) Abmessungen der hintereinander angeordneten Musterelemente (7) und/oder die Abstände zwischen den hintereinander angeordneten Musterelementen (7) aufgelöst werden, und
- die Auswirkungen der Exzentrizität (e) auf das Bestimmen eines Drehwinkels mit Hilfe der aufgelösten Abmessungen der Musterelemente (7) bzw. der aufgelösten Abstände rechnerisch ermittelt werden.

6. Vorrichtung zum genauen Bestimmen eines Drehwinkels (w) mit
- einem optischen Detektor (1), der eine Vielzahl aneinander gereihter Detektorelemente (2) mit einem linienförmigen ortsauflösenden Bereich (21) umfasst, und
- einem Drehkörper (3), der mit dem Detektor (1) um eine Achse (a) drehbar verbunden ist und eine Vielzahl um ein Musterzentrum (4) angeordneter Musterelemente (5, ..., 13) aufweist, von denen eine Vielzahl in Drehrichtung hintereinander angeordnet ist, wobei
- wenigstens ein Teil der Musterelemente (5, ..., 13) über optische Strahlen wenigstens teilweise auf Detektorelementen (2) abbildbar sind, und
- über die Detektorelemente (2) ein und desselben Detektors (1) Positionen (p) der abgebildeten Musterelemente (5, ..., 13) auflösbar sind,
**dadurch gekennzeichnet, dass**
- die optischen Detektorelemente (2) und Musterelemente (5, ..., 13) derart ausgebildet und zueinander angeordnet sind, dass
- anhand von Distanzen zwischen den im linienförmigen ortsauflösenden Bereich (21) aufgelösten Positionen (p) wenigstens eines Musterelements (5, ..., 13) Auswirkungen einer Exzentrizität (e) des Musterzentrums (4) zur Achse (a) auf das Bestimmen eines Drehwinkels rechnerisch ermittelbar sind und
- über aufgelöste Positionen (p1 p2, p3) der hintereinander angeordneten Musterelemente (5, 6, 7) unter Berücksichtigung der Auswirkungen der Drehwinkel (w) genau bestimmbar ist.

7. Vorrichtung nach Anspruch 6, bei der die in Drehrichtung hintereinander angeordneten Musterelemente (5) radial ausgerichtet und im Wesentlichen als rechteckförmige Schlitze ausgebildet sind.

8. Vorrichtung nach Anspruch 7, bei der mit Hilfe der aufgelösten Positionen abgebildeter, hintereinander angeordneter Musterelemente (5) wenigstens zweier Gruppen (14, ..., 17) wenigstens zwei Gruppenpositionen (p14, ..., p17) rechnerisch ermittelbar sind, und über die wenigstens zwei ermittelten Gruppenpositionen (p14, ..., p17) die Auswirkungen auf das Bestimmen eines Drehwinkels rechnerisch ermittelbar sind.

9. Vorrichtung nach Anspruch 8, bei der die wenigstens zwei Gruppen (16, 17) beidseitig durch auf den Detektorelementen (2) nicht abgebildete, hintereinander angeordnete Musterelemente (5) voneinander beabstandet sind.

10. Vorrichtung nach Anspruch 6, bei der einander zugewandte Seitenlinien benachbarter, hintereinander angeordneter Musterelemente (7) wesentlich gegen die Radialrichtung geneigt und gegebenenfalls gekrümmt sind.

11. Vorrichtung nach Anspruch 10, bei der die hintereinander angeordneten Musterelemente (7) als radial ausgerichtet, gegebenenfalls ins Musterzentrum zeigend, dreieck- oder trapezförmig ausgebildet sind.

12. Vorrichtung nach einem der Ansprüche 6 bis 11, bei der wenigstens ein Musterelement (8, ..., 13) symmetrisch zum Musterzentrum (4), beispielsweise kreisförmig, ausgebildet ist und Auswirkungen auf das Bestimmen eines Drehwinkels mit Hilfe wenigstens einer Position (p4, ..., p7) des symmetrischen Musterelements (8, ..., 13) rechnerisch ermittelbar ist.

13. Vorrichtung nach einem der Ansprüche 6 bis 12, bei der die Musterelements (5, 6, 7) derart ausgebildet und angeordnet sind, dass der Drehwinkel inkrementell oder absolut bestimmbar ist.

14. Vorrichtung nach einem der Ansprüche 6 bis 13, bei der die Musterelemente (5) durch lichtdurchlässige Ausnehmungen in einer, gegebenenfalls kreisringförmigen, lichtundurchlässigen Materialschicht (18) verkörpert sind.

15. Vorrichtung nach einem der Ansprüche 6 bis 13, bei der den Musterelementen diffraktive Strukturen auf dem Drehkörper (3) zugeordnet sind.

16. Vorrichtung nach einem der Ansprüche 6 bis 15, bei der der Drehkörper (3) scheibenförmig ausgebildet ist und sich aus Glas, Metall oder Kunststoff zusammensetzt.

17. Vorrichtung nach einem der Ansprüche 6 bis 16, bei der die Detektorelemente (2) im Wesentlichen in Drehrichtung entlang einer einzigen, gegebenenfalls geraden, Linie aneinander gereiht sind.

18. Vorrichtung nach Anspruch 12, bei der das wenigstens eine abgebildete, symmetrisch zum Musterzentrum ausgebildete Musterelement (8, ..., 13) von einer einzigen Linie aneinander gereihter Detektorelemente (2) in Form einer Sekante geschnitten wird.

19. Vorrichtung nach einem der Ansprüche 6 bis 16, bei der die Detektorelemente (2) matrizenförmig in Zeilen und Spalten angeordnet sind.

20. Vorrichtung nach einem der Ansprüche 6 bis 19, bei der die Erstreckung der Detektorelemente (2) wenigstens in einer Richtung grösser als die Ersteckung der abbildbaren Musterelemente (5, ..., 13) ist.

21. Vorrichtung nach einem der Ansprüche 6 bis 19, bei der ein einziger Detektor (1) vorgesehen ist.

## Claims

1. Method for precise determination of an angle of rotation (w) via an optical detector (1) comprising a multiplicity of detector elements (2) arranged in series and having a linear position-resolving region (21) and via a rotating body (3) comprising a multiplicity of pattern elements (5, ..., 13) arranged about a pattern centre (4), a multiplicity of which is arranged one behind the other in direction of rotation, which rotating body (3) is connected to the detector (1) so as to be rotatable about an axis (a), in which method
- at least some of the pattern elements (5, ..., 13) are focused via optical beams at least partly onto detector elements (2), and
- positions (p) of the focused pattern elements (5, ..., 13) are resolved via the detector elements (2) of one and the same detector (1),
**characterized in that**
- effects of an eccentricity (e) of the pattern centre (4) relative to the axis (a) on the determination of an angle of rotation are determined computationally on the basis of distances between the positions (p) of at least one of the pattern elements (5, ..., 13), which positions are resolved in the linear position-resolving region (21), and **in that**
- the angle of rotation (w) is precisely determined via resolved positions (p1, p2, p3) of a plurality of pattern elements (5, 6, 7) arranged one behind the other, taking into account the determined effects.

2. Method according to Claim 1, in which
- pattern elements (5) arranged one behind the other are combined to form at least two groups (14, ..., 17),
- at least two group positions (p14, ..., p17) are computationally determined via the resolved positions of the respective combined pattern elements (5), and
- the effects of the eccentricity (e) on the determination of an angle of rotation are computationally determined via the at least two group positions (p14, ..., p17) determined.

3. Method according to Claim 2, the at least two groups (16, 17) being separated by pattern elements (5) arranged between the groups.

4. Method according to any of Claims 1 to 3, at least one of the pattern elements (8, ..., 13) being formed symmetrically to the pattern centre (4), for example in a circular manner, in which method
- positions (p4, ..., p7) of the at least one focused, symmetrical pattern element (8, ..., 13) are resolved, and
- the effects of the eccentricity (e) on the determination of the angle of rotation are computationally determined with the aid of the resolved positions (p4, ..., p7) of the focused, symmetrical pattern element (8, ..., 13).

5. Method according to Claim 1, facing side lines of adjacent pattern elements (7) arranged one behind the other being inclined relative to the radial direction, in which method
- dimensions of the pattern elements (7) arranged one behind the other and/or the spacings between the pattern elements (7) arranged one behind the other are resolved via the detector elements (2), and
- the effects of the eccentricity (e) on the determination of an angle of rotation are computationally determined with the aid of the resolved dimensions of the pattern elements (7) or of the resolved spacings.

6. Device for precise determination of an angle of rotation (w), comprising
- an optical detector (1) which comprises a multiplicity of detector elements (2) arranged in series and having a linear position-resolving region (21), and
- a rotating body (3) which is connected to the detector (1) so as to be rotatable about an axis (a) and has a multiplicity of pattern elements (5, ..., 13) arranged about a pattern centre (4), a multiplicity of which is arranged one behind the other in the direction of rotation,
- at least some of the pattern elements (5, ..., 13) being capable of being focused via optical beams at least partly onto detector elements (2), and
- positions (p) of the focused pattern elements (5, ..., 13) being capable of being resolved via the detector elements (2) of one and the same detector (1),
**characterized in that**
- the optical detector elements (2) and pattern elements (5, ..., 13) are formed in such a way and arranged in such a way that
- effects of an eccentricity (e) of the pattern centre (4) relative to the axis (a) on the determination of an angle of rotation can be computationally determined on the basis of the distances between the positions (p) of at least one pattern element (5, ..., 13), which positions are resolved in the linear position-resolving region (21), and
- the angle of rotation (w) can be precisely determined via resolved positions (p1, p2, p3) of the pattern elements (5, 6, 7) arranged one behind the other, taking into account the effects.

7. Device according to Claim 6, in which the pattern elements (5) arranged one behind the other in the direction of rotation are radially oriented and are substantially in the form of rectangular slots.

8. Device according to Claim 7, in which at least two group positions (p14, ..., p17) can be computationally determined with the aid of the resolved positions of focused pattern elements (5) of at least two groups (14, ..., 17), which pattern elements are arranged one behind the other, and the effects on the determination of an angle of rotation can be computationally determined via the at least two group positions (p14, ..., p17) determined.

9. Device according to Claim 8, in which the at least two groups (16, 17) are separated from one another on both sides by pattern elements (5) arranged one behind the other and not focused on the detector elements (2).

10. Device according to Claim 6, in which the facing side lines of adjacent pattern elements (7) arranged one behind the other are inclined substantially relative to the radial direction and are optionally curved.

11. Device according to Claim 10, in which the pattern elements (7) arranged one behind the other are radially oriented, optionally point into the pattern centre and are triangular or trapezoidal.

12. Device according to any of Claims 6 to 11, in which at least one pattern element (8, ..., 13) is formed symmetrically to the pattern centre (4), for example in a circular manner, and effects on the determination of an angle of rotation can be computationally determined with the aid of at least one position (p4, ..., p7) of the symmetrical pattern element (8, ..., 13).

13. Device according to any of Claims 6 to 12, in which the pattern elements (5, 6, 7) are formed in such a way and arranged in such a way that the angle of rotation can be determined incrementally or absolutely.

14. Device according to any of Claims 6 to 13, in which the pattern elements (5) are embodied by cut-outs which are transparent to light in an optionally annular material layer (18) which is opaque to light.

15. Device according to any of Claims 6 to 13, in which diffractive structures on the rotating body (3) are coordinated with the pattern elements.

16. Device according to any of Claims 6 to 15, in which the rotating body (3) is disc-shaped and is composed of glass, metal or plastic.

17. Device according to any of Claims 6 to 16, in which the detector elements (2) are arranged in series substantially in the direction of rotation along a single, optionally straight line.

18. Device according to Claim 12, in which the at least one focused pattern element (8, ..., 13) formed symmetrically to the pattern centre is intersected by a single line of detector elements (2) arranged in series, in the form of a secant.

19. Device according to any of Claims 6 to 16, in which the detector elements (2) are arranged in rows and columns in the form of a matrix.

20. Device according to any of Claims 6 to 19, in which the extension of the detector elements (2) at least in one direction is greater than the extension of the focusable pattern elements (5, ..., 13).

21. Device according to any of Claims 6 to 19, in which a single detector (1) is provided.

## Revendications

1. Procédé de détermination précise d'un angle de rotation (w) par l'intermédiaire d'un détecteur optique (1), comprenant une pluralité d'éléments détecteurs (2) alignés en rangée les uns les autres, avec une zone (21) présentant une résolution locale, en forme de ligne et, sur un corps rotatif (3), avec une pluralité d'éléments de motif (5, ..., 13) disposés autour d'un centre de motifs (4), dont une pluralité est disposée les uns derrière les autres dans le sens de rotation, ledit corps rotatif (3) étant relié au détecteur (1), avec possibilité de rotation autour d'un axe (a), procédé dans lequel :
- au moins une partie des éléments de motif (5, ..., 13) sont imagés au moins partiellement sur des éléments détecteurs (2), par l'intermédiaire de rayons optiques, et
- un seul et même détecteur (1), par l'intermédiaire des éléments détecteurs (2), discrimine des positions (p) des éléments de motifs (5, ..., 13) imagés,
**caractérisé en ce que**,
- à l'aide des distances entre les positions (p), discriminées dans la zone (21) en forme de ligne, présentant une résolution locale, d'au moins l'un des éléments de motif (5, ..., 13), les effets d'une excentricité (e) du centre de motifs (4) par rapport à l'axe (a) sur la détermination d'un angle de rotation sont déterminés par calcul, et **en ce que**
- l'angle de rotation (w) est déterminé avec précision, par l'intermédiaire de positions (p1, p2, p3) discriminées de plusieurs éléments de motif (5, 6, 7) disposés les uns derrière les autres, en prenant en considération les effets déterminés.

2. Procédé selon la revendication 1, dans lequel
- des éléments de motif (5), disposés les uns derrière les autres, sont groupés en au moins deux groupes (14, ..., 17),
- au moins deux positions de groupe (p14, ..., p17) sont déterminées par calcul, par l'intermédiaire des positions discriminées des éléments de motif (5) chaque fois regroupés, et
- les effets de l'excentricité (e) sur la détermination d'un angle de rotation sont déterminés par calcul, par l'intermédiaire des au moins deux positions de groupe (p14, ..., p17) déterminées.

3. Procédé selon la revendication 1, dans lequel les au moins deux groupes (16, 17) sont espacés l'un de l'autre par des éléments de motif (5) disposés entre les groupes.

4. Procédé selon l'une des revendications 1 à 3, dans lequel au moins l'un des éléments de motif (8, ..., 13) est réalisé de façon symétrique, par exemple en forme de cercle, par rapport au centre de motifs (4), procédé pour lequel :
- des positions (p4, ..., p7) du au moins un éléments de motif (8, ..., 13) symétrique, imagé, sont discriminées, et
- les effets de l'excentricité (e) sur la détermination d'un angle de rotation sont déterminés par calcul, à l'aide des positions (p4, ..., P7) discriminées de l'élément de motif (8, ..., 13) symétrique imagé.

5. Procédé selon la revendication 1, dans lequel des lignes latérales, tournées les unes vers les autres, d'éléments de motif (7) voisins, disposés les uns derrière les autres, sont inclinées par rapport à la direction radiale, procédé pour lequel :
- par l'intermédiaire des éléments détecteurs (2), des dimensions des éléments de motif (7) disposés les uns derrière les autres et/ou les espacements entre les éléments de motif (7) disposés les uns derrière les autres sont discriminés, et
- les effets de l'excentricité (e) sur la détermination d'un angle de rotation sont déterminés par calcul, à l'aide des dimensions discriminées des éléments de motif (7), ou des espacements discriminés.

6. Dispositif de détermination précise d'un angle de rotation (w), comprenant :
- un détecteur optique (1), comprenant une pluralité d'éléments détecteurs (2) alignées en rangée les uns les autres, avec une zone (21) présentant une résolution locale, en forme de ligne et,
- un corps rotatif (3), relié au détecteur (1), avec possibilité de rotation autour d'un axe (a) et présentant une pluralité d'éléments de motif (5, ..., 13) disposés autour d'un centre de motifs (4), éléments de motif dont une pluralité est disposée les uns derrière les autres dans le sens de rotation, dans lequel
- au moins une partie des éléments de motif (5, ..., 13) sont susceptibles d'être imagés au moins partiellement sur des éléments détecteurs (2), par l'intermédiaire de rayons optiques, et
- des positions (p) des éléments de motifs (5, ..., 13) imagés sont susceptibles d'être discriminées par un seul et même détecteur (1), par l'intermédiaire des éléments détecteurs (2),
**caractérisé en ce que**,
- les éléments détecteurs (2) et les éléments de motifs (5, ..., 13) sont réalisés et disposés les uns par rapport aux autres de manière que,
à l'aide des distances entre les positions (p), discriminées dans la zone (21) en forme de ligne, présentant une résolution locale, d'au moins un élément de motif (5, ..., 13), les effets d'une excentricité (e) du centre de motifs (4) par rapport à l'axe (a) sur la détermination d'un angle de rotation sont susceptibles d'être déterminés par calcul, et
- l'angle de rotation (w) est susceptible d'être déterminé avec précision, par l'intermédiaire de positions (p1, p2, p3) discriminées des éléments de motif (5, 6, 7) disposés les uns derrière les autres, en prenant en considération les effets.

7. Dispositif selon la revendication 6, dans lequel les éléments de motif (5) disposés les uns derrière les autres dans le sens de rotation sont orientés radialement et sont réalisés sensiblement sous forme de fentes rectangulaires.

8. Dispositif selon la revendication 7, dans lequel, à l'aide des positions discriminées des éléments de motif (5) imagés, disposés les uns derrière les autres, d'au moins deux groupes (14, ..., 17), au moins deux positions de groupes (p14, ..., p17) sont susceptibles d'être déterminées par calcul, et les effets sur la détermination d'un angle de rotation sont susceptibles d'être déterminés par calcul, par l'intermédiaire des au moins deux positions de groupe (p14, ..., p17) déterminées.

9. Dispositif selon la revendication 8, dans lequel les au moins deux groupes (16, 17) sont espacés les uns des autres, des deux côtés, par des éléments de motif (5) disposés les uns derrière les autres, non imagés sur les éléments détecteurs (2).

10. Dispositif selon la revendication 6, dans lequel des lignes latérales, tournées les unes vers les autres, d'éléments de motif (7) voisins, disposés les uns derrière les autres, sont sensiblement inclinées par rapport à la direction radiale et, le cas échéant, incurvées.

11. Dispositif selon la revendication 10, dans lequel les éléments de motif (7), disposés les uns derrière les autres, sont réalisés sous forme de triangles ou de trapèzes, orientés radialement, le cas échéant tournés vers le centre de motifs.

12. Dispositif selon l'une des revendications 6 à 11, dans lequel au moins un élément de motif (8, ..., 13) est réalisé symétriquement par rapport au centre de motifs (4), par exemple en forme de cercle, et les effets sur la détermination d'un angle de rotation sont susceptibles d'être déterminés par calcul, à l'aide d'au moins une position (p4, ..., p7) de l'élément de motif (8, ..., 13) symétrique.

13. Dispositif selon l'une des revendications 6 à 12, dans lequel les éléments de motifs (5, 6, 7) sont réalisés et disposés de manière que l'angle de rotation soit susceptible d'être déterminé de manière incrémentielle ou absolue.

14. Dispositif selon l'une des revendications 6 à 13, dans lequel les éléments de motif (5) sont matérialisés par des évidements transparents à la lumière, dans une couche de matériau (18) opaque à la lumière, le cas échéant en forme d'anneaux de cercle.

15. Dispositif selon l'une des revendications 6 à 13, dans lequel des structures diffractives sont associées aux éléments de motif, sur le corps rotatif (3).

16. Dispositif selon l'une des revendications 6 à 15, dans lequel le corps rotatif (3) est réalisé en forme de disque, et se compose de verre, métal ou matière synthétique.

17. Dispositif selon l'une des revendications 6 à 16, dans lequel les éléments détecteurs (2) sont alignés en rangée les uns les autres, sensiblement dans le sens de rotation, le long d'une ligne unique, le cas échéant rectiligne.

18. Dispositif selon la revendication 12, dans lequel le au moins un élément de motif (8, ..., 13) imagé, réalisé de manière symétrique au centre de motifs, est coupé sous la forme d'une sécante, par une ligne unique d'éléments détecteurs (2) alignés en rangée les uns les autres.

19. Dispositif selon l'une des revendications 6 à 16, dans lequel les éléments détecteurs (2) sont disposés en forme de matrice, en lignes et en colonnes.

20. Dispositif selon l'une des revendications 6 à 19, dans lequel l'étendue des éléments détecteurs (2), au moins dans une direction, est plus .grande que l'étendue des éléments de motif (5, ..., 13) susceptibles d'être imagés.

21. Dispositif selon l'une des revendications 6 à 19, dans lequel un détecteur (1) unique est prévu.
